# EUROPEAN PATENT APPLICATION

(11) **EP 4 369 829 A1**
(43) Date of publication of application: **15.05.2024**
(21) Application number: 21949309.5
(22) Date of filing: 07.07.2021
(51) Int. Cl.: H04W 72/12

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2021/025701
(87) International publication number: WO 2023/281676

(57) **Abstract**

A terminal according to one aspect of the present disclosure includes a receiving section that receives information indicating that a plurality of code words are to be scheduled by a downlink control information regarding a physical uplink shared channel, and a control section that controls transmission of the physical uplink shared channel for the plurality of code words, based on the information. According to one aspect of the present disclosure, PUSCH transmission for a plurality of CWs can be appropriately performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, Rel-18 NR), a scheme in which a user terminal (User Equipment (UE)) transmits a plurality of code words (CWs) using an uplink shared channel (Physical Uplink Shared Channel (PUSCH)) has been under study. However, details of operations therefor have not been fully studied yet. For example, when a plurality of CWs are transmitted on a PUSCH, how to support code block group (CBG)-based transmission has not been fully studied yet. Unless PUSCH transmission for a plurality of CWs is appropriately performed, throughput may be reduced or communication quality may be deteriorated.

In view of this, the present disclosure has one object to provide a terminal, a radio communication method, and a base station for appropriately performing PUSCH transmission for a plurality of CWs. Solution to Problem

A terminal according to one aspect of the present disclosure includes a receiving section that receives information indicating that a plurality of code words are to be scheduled by a downlink control information regarding a physical uplink shared channel, and a control section that controls transmission of the physical uplink shared channel for the plurality of code words, based on the information.

### Advantageous Effects of Invention

According to one aspect of the present disclosure, PUSCH transmission for a plurality of CWs can be appropriately performed.

### Brief Description of Drawings

[FIG. 1] FIG. 1 is a diagram to show an example of association between precoder types and TPMI indexes.
[FIG. 2] FIGS. 2A to 2C are diagrams to show examples of PUSCH transmission using a plurality of panels.
[FIG. 3] FIGS. 3A to 3C are diagrams to show examples of methods 1 to 3 of simultaneous UL transmission using a plurality of panels.
[FIG. 4] FIGS. 4A and 4B are diagrams to show examples of a bit configuration of a CBGTI field according to a first embodiment.
[FIG. 5] FIGS. 5A and 5B are diagrams to show examples of a bit value of a DCI field according to a second embodiment.
[FIG. 6] FIG. 6 is a diagram to show an example of a schematic structure of a radio communication system according to one embodiment.
[FIG. 7] FIG. 7 is a diagram to show an example of a structure of a base station according to one embodiment.
[FIG. 8] FIG. 8 is a diagram to show an example of a structure of a user terminal according to one embodiment.
[FIG. 9] FIG. 9 is a diagram to show an example of a hardware structure of the base station and the user terminal according to one embodiment.

### Description of Embodiments

### (Repetition Transmission)

In Rel. 15, repetition transmission is supported in data transmission. For example, a base station (a network (NW), a gNB) may repeat transmission of DL data (for example, a downlink shared channel (PDSCH)) for a given number of times. Alternatively, a UE may repeat UL data (for example, an uplink shared channel (PUSCH)) for a given number of times.

The UE may be scheduled with a given number of repeated PUSCH transmissions by a single piece of DCI. The number of repetitions is also referred to as a repetition factor K or an aggregation factor K.

An n-th repetition is also referred to as an n-th transmission occasion or the like, and may be identified by a repetition index k (0 ≤ k ≤ K - 1). The repetition transmission may be applied to a PUSCH dynamically scheduled by DCI (for example, a dynamic grant-based PUSCH), or may be applied to a configured grant-based PUSCH.

The UE semi-statically receives information (for example, aggregationFactorUL or aggregationFactorDL) indicating the repetition factor K, using higher layer signaling. Here, the higher layer signaling may be, for example, any one of or a combination of RRC (Radio Resource Control) signaling, MAC (Medium Access Control) signaling, broadcast information, and the like.

For example, the MAC signaling may use a MAC control element (MAC CE), a MAC PDU (Protocol Data Unit), and the like. For example, the broadcast information may be a master information block (MIB), a system information block (SIB), minimum system information (RMSI (Remaining Minimum System Information)), and the like.

The UE controls PDSCH reception processing (for example, at least one of reception, demapping, demodulation, and decoding) or PUSCH transmission processing (for example, at least one of transmission, mapping, modulation, and coding) in K consecutive slots, based on at least one of the following field values (or pieces of information indicated by the field values) in the DCI:
- allocation of time domain resources (for example, a start symbol, the number of symbols in each slot, and the like),
- allocation of frequency domain resources (for example, a given number of resource blocks (RBs), a given number of resource block groups (RBGs)),
- modulation and coding scheme (MCS) index,
- configuration of a PUSCH demodulation reference signal (DMRS),
- spatial relation information (spatial relation info) of the PUSCH, or a state of transmission configuration indication (or Transmission Configuration Indicator (TCI)) (TCI state (TCI-state)).

Among the K consecutive slots, the same symbol allocation may be applied. The UE may determine symbol allocation in each slot, based on the start symbol S and the number L of symbols (for example, a Start and Length Indicator (SLIV)) determined based on a value m of a given field (for example, a time domain resource assignment (TDRA) field) in the DCI. Note that the UE may determine a first slot, based on K2 information determined based on the value m of the given field (for example, the TDRA field) in the DCI.

In contrast, among the K consecutive slots, a redundancy version (RV) applied to a TB based on the same data may be the same, or may be at least partially different. For example, the RV applied to the TB in the n-th slot (transmission occasion, repetition) may be determined based on a value of a given field (for example, an RV field) in the DCI.

In Rel. 15, repetition transmission of PUSCHs may be performed across a plurality of slots (unit of a slot). In Rel. 16 or later versions, repetition transmission of PUSCHs in a unit shorter than a slot (for example, a unit of a sub-slot, a unit of a mini-slot, or a unit of a given number of symbols) is supported.

The UE may determine symbol allocation of PUSCH transmission (for example, PUSCH of k = 0) in a given slot, based on the start symbol S and the number L of symbols determined based on a value m of a given field (for example, the TDRA field) in the DCI of the PUSCH. Note that the UE may determine a given slot, based on Ks information determined based on the value m of the given field (for example, the TDRA field) in the DCI.

The UE may dynamically receive information (for example, numberofrepetitions) indicating the repetition factor K, using downlink control information. The repetition factor may be determined, based on the value m of the given field (for example, the TDRA field) in the DCI. For example, a table defining correspondence between a bit value reported on the DCI and the repetition factor K and the start symbol S and the number L of symbols may be supported.

Slot-based repetition transmission may be referred to as repetition transmission type A (for example, PUSCH repetition Type A), and sub-slot-based repetition transmission may be referred to as repetition transmission type B (for example, PUSCH repetition Type B).

The UE may be configured to apply at least one of repetition transmission type A and repetition transmission type B. For example, the repetition transmission type applied by the UE may be reported from the base station to the UE, using higher layer signaling (for example, PUSCHRepTypeIndicator) .

For each DCI format for scheduling the PUSCH, any one of repetition transmission type A and repetition transmission type B may be configured for the UE.

For example, when higher layer signaling (for example, PUSCHRepTypeIndicator-AorDCIFormat0_1) is configured to repetition transmission type B (for example, PUSCH-RepTypeB) regarding a first DCI format (for example, DCI format 0_1), the UE applies repetition transmission type B to PUSCH repetition transmission scheduled by the first DCI format. Otherwise (for example, when PUSCH-RepTypeB is not configured, or when PUSCH-RepTypA is configured), the UE the UE applies repetition transmission type A to PUSCH repetition transmission scheduled by the first DCI format.

### (PUSCH Precoder)

In NR, a scheme in which the UE supports at least one of a codebook (CB)-based transmission and a non-codebook (NCB)-based transmission has been under study.

For example, a scheme in which the UE determines a precoder (precoding matrix) for at least one of CB-based and NCB-based uplink shared channel (Physical Uplink Shared Channel (PUSCH)) transmissions by using at least a reference signal for measurement (Sounding Reference Signal (SRS)) resource indicator (SRS Resource Indicator (SRI)) has been under study.

In a case of the CB-based transmission, the UE may determine a precoder for PUSCH transmission, based on the SRI, a transmitted rank indicator (TRI), a transmitted precoding matrix indicator (TPMI), or the like. In a case of the NCB-based transmission, the UE may determine the precoder for PUSCH transmission, based on the SRI.

The SRI, the TRI, the TPMI, or the like may be reported to the UE by using downlink control information (DCI). The SRI may be indicated by an SRS Resource Indicator field (SRI field) in the DCI, or may be indicated by a parameter "srs-ResourceIndicator" included in an RRC information element "ConfiguredGrantConfig" of a configured grant PUSCH. The TRI and the TPMI may be indicated by a "Precoding information and number of layers" field in the DCI.

The UE may report UE capability information related to a precoder type, and be configured with a precoder type based on the UE capability information from the base station by using higher layer signaling. The UE capability information may be information (which may be represented by an RRC parameter "pusch-TransCoherence") of a precoder type used by the UE in PUSCH transmission.

In the present disclosure, the higher layer signaling may be, for example, any one of Radio Resource Control (RRC) signaling, Medium Access Control (MAC) signaling, broadcast information, and the like, or a combination of these.

As the MAC signaling, for example, a MAC control element (MAC CE), a MAC Protocol Data Unit (PDU), or the like may be used. The broadcast information may be, for example, a master information block (MIB), a system information block (SIB), or the like.

The UE may determine a precoder to be used in PUSCH transmission, based on information (which may be represented by an RRC parameter "codebookSubset") of a precoder type included in PUSCH configuration information (an information element "PUSCH-Config" of RRC signaling) reported on higher layer signaling. The UE may be configured with a subset of PMIs indicated by the TPMIs by codebookSubset.

Note that the precoder type may be indicated by one of or a combination of at least two of "full coherent" ("fully coherent", "coherent"), "partial coherent", and "non coherent" ("non-coherent") (which may be, for example, represented by parameters such as "fully and partial and non coherent (fullyAndPartialAndNonCoherent)" and "partial and non coherent (partialAndNonCoherent)").

"Fully coherent" may mean that synchronization is established between all of the antenna ports used for transmission (which may be expressed as "phases can be caused to match", "phase control can be performed for each coherent antenna port", "a precoder can be appropriately applied to each coherent antenna port", or the like). "Partial coherent" may mean that synchronization is established between a part of ports of the antenna ports used for transmission but synchronization is not established between the part of ports and other ports. "Non coherent" may mean that no synchronization is established between any antenna port used for transmission.

Note that it may be assumed that the UE that supports the precoder type of "fully coherent" supports the precoder type of "partial coherent" and "non coherent". It may be assumed that the UE that supports the precoder type of "partial coherent" supports the precoder type of "non coherent".

The precoder type may be interpreted as coherency, PUSCH transmission coherence, a coherent type, a coherence type, a codebook type, a codebook subset, a codebook subset type, or the like.

The UE may determine a precoding matrix corresponding to a TPMI index obtained from the DCI (for example, DCI format 0_1; the same applies hereinafter) for scheduling UL transmission, out of a plurality of precoders (which may be referred to as precoding matrices, codebooks, or the like) for CB-based transmission.

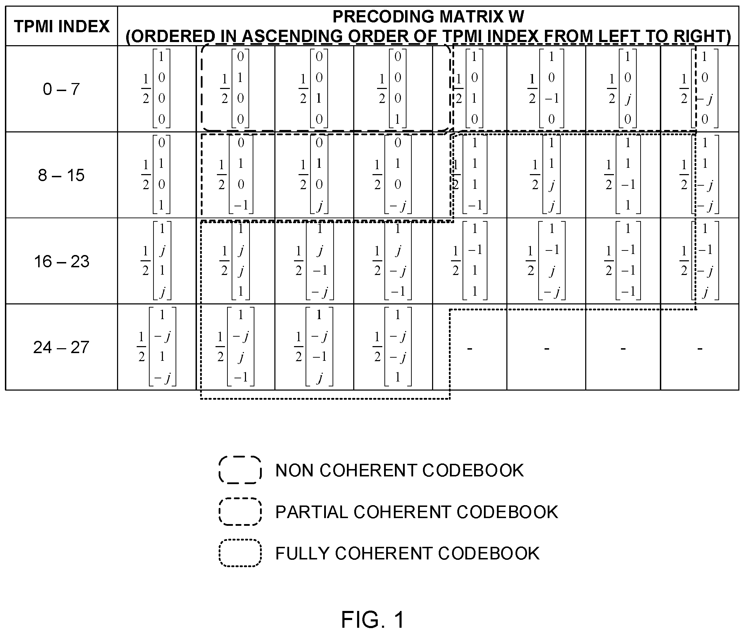

FIG. 1 is a diagram to show an example of association between the precoder types and the TPMI indexes. FIG. 1 corresponds to a table of a precoding matrix W for single layer (rank 1) transmission using four antenna ports in DFT-s-OFDM (Discrete Fourier Transform spread OFDM, transform precoding is enabled).

In FIG. 1, when the precoder type (codebookSubset) is "fully and partial and non coherent (fullyAndPartialAndNonCoherent)", any TPMI from 0 to 27 is reported to the UE for single layer transmission. When the precoder type is "partial and non coherent (partialAndNonCoherent)", any TPMI from 0 to 11 is configured for the UE for single layer transmission. When the precoder type is "non coherent (noncoherent)", any TPMI from 0 to 3 is configured for the UE for single layer transmission.

Note that, as shown in FIG. 1, a precoding matrix in which only one component in each column is not 0 may be referred to as a non coherent codebook. A precoding matrix in which a given number of (not all of) components in each column are not 0 may be referred to as a partial coherent codebook. A precoding matrix in which none of the components in each column is 0 may be referred to as a fully coherent codebook.

The non coherent codebook and the partial coherent codebook may each be referred to as an antenna selection precoder. The fully coherent codebook may be referred to as a non-antenna selection precoder.

Note that, in the present disclosure, the partial coherent codebook may correspond to codebooks (i.e., codebooks of TPMI = 4 to 11, in a case of single layer transmission with four antenna ports), which are obtained by removing codebooks corresponding to the TPMIs indicated for the UE configured with a codebook subset of "non coherent" (for example, the RRC parameter "codebookSubset" = "noncoherent") from codebooks (precoding matrices) corresponding to the TPMIs indicated for the UE configured with a codebook subset of "partial coherent" (for example, the RRC parameter "codebookSubset" = "partialAndNonCoherent") by the DCI for codebook-based transmission.

Note that, in the present disclosure, the fully coherent codebook may correspond to codebooks (i.e., codebooks of TPMI = 12 to 27, in a case of single layer transmission with four antenna ports), which are obtained by removing codebooks corresponding to the TPMIs indicated for the UE configured with a codebook subset of "partial coherent" (for example, the RRC parameter "codebookSubset" = "partialAndNonCoherent") from codebooks (precoding matrices) corresponding to the TPMIs indicated for the UE configured with a codebook subset of "fully coherent" (for example, the RRC parameter "codebookSubset" = "fullyAndPartialAndNonCoherent") by the DCI for codebook-based transmission.

### (Spatial Relation for SRS and PUSCH)

The UE may receive information (SRS configuration information, for example, a parameter in an RRC control element "SRS-Config") that is used for transmission of a reference signal for measurement (for example, a sounding reference signal (SRS)).

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be related to a given number of SRS resources (a given number of SRS resources may be grouped together). Each SRS resource may be identified by an SRS resource indicator (SRI) or an SRS resource ID (Identifier).

The SRS resource set information may include pieces of information of an SRS resource set ID (SRS-ResourceSetId), a list of SRS resource IDs (SRS-ResourceId) used in the resource set, an SRS resource type, and usage of the SRS.

Here, the SRS resource type may indicate any one of the periodic SRS (P-SRS), the semi-persistent SRS (SP-SRS), and the aperiodic SRS (Aperiodic SRS (A-SRS, AP-SRS)). Note that the UE may periodically (or periodically after activation) transmit the P-SRS and the SP-SRS, and transmit the A-SRS, based on an SRS request of the DCI.

The usage (an RRC parameter "usage", an L1 (Layer-1) parameter "SRS-SetUse") may be, for example, beam management (beamManagement), codebook-based transmission (codebook (CB)), non-codebook-based transmission (nonCodebook (NCB)), antenna switching (antennaSwitching), or the like. The SRS with the usage of codebook-based transmission or non-codebook-based transmission may be used for determination of a precoder of codebook-based or non-codebook-based PUSCH transmission based on the SRI.

For example, in a case of codebook-based transmission, the UE may determine the precoder for PUSCH transmission, based on the SRI, a transmitted rank indicator (TRI), and a transmitted precoding matrix indicator (TPMI). In a case of non-codebook-based transmission, the UE may determine the precoder for PUSCH transmission, based on the SRI.

The SRS resource information may include an SRS resource ID (SRS-ResourceId), the number of SRS ports, an SRS port number, transmission Comb, SRS resource mapping (for example, a time and/or frequency resource position, a resource offset, periodicity of resources, the number of repetitions, the number of SRS symbols, an SRS bandwidth, or the like), hopping related information, an SRS resource type, a sequence ID, spatial relation information of the SRS, or the like.

The spatial relation information (for example, an RRC information element "spatialRelationInfo") of the SRS may indicate spatial relation information between a given reference signal and the SRS. The given reference signal may be at least one of a synchronization signal/broadcast channel (a Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of the SRS may include at least one of an SSB index, a CSI-RS resource ID, and an SRS resource ID as an index of the given reference signal.

Note that, in the present disclosure, an SSB index, an SSB resource ID, and an SSBRI (SSB Resource Indicator) may be interchangeably interpreted as each other. A CSI-RS index, a CSI-RS resource ID, and a CRI (CSI-RS Resource Indicator) may be interchangeably interpreted as each other. An SRS index, an SRS resource ID, and an SRI may be interchangeably interpreted as each other.

The spatial relation information of the SRS may include a serving cell index, a BWP index (BWP ID), or the like corresponding to the given reference signal.

In NR, transmission of an uplink signal may be controlled based on whether or not there is beam correspondence (BC). BC may be, for example, capability of a given node (for example, the base station or the UE) of determining a beam (a transmit beam, a Tx beam) used for transmission of a signal, based on a beam (a receive beam, an Rx beam) used for reception of a signal.

Note that BC may be referred to as transmit/receive beam correspondence (Tx/Rx beam correspondence), beam reciprocity, beam calibration, calibrated/non-calibrated, reciprocity calibrated/non-calibrated, a correspondence degree, a matching degree, or the like.

For example, in a case without BC, the UE may transmit an uplink signal (for example, the PUSCH, the PUCCH, the SRS, or the like) by using the same beam (spatial domain transmission filter) as the SRS (or the SRS resource) indicated by the base station based on measurement results of one or more SRSs (or SRS resources).

On the other hand, in a case with BC, the UE may transmit an uplink signal (for example, the PUSCH, the PUCCH, the SRS, or the like) by using a beam (spatial domain transmission filter) the same as or corresponding to a beam (spatial domain reception filter) used for reception of a given SSB or CSI-RS (or CSI-RS resources).

Regarding a given SRS resource, when the spatial relation information related to the SSB or the CSI-RS and the SRS is configured for the UE (for example, in a case with BC), the UE may transmit the SRS resource by using a spatial domain filter (spatial domain transmission filter) the same as the spatial domain filter (spatial domain reception filter) for reception of the SSB or the CSI-RS. In this case, the UE may assume that the UE receive beam of the SSB or the CSI-RS and the UE transmit beam of the SRS are the same.

Regarding a given SRS (target SRS) resource, when the spatial relation information related to another SRS (reference SRS) and the SRS (target SRS) is configured for the UE (for example, in a case with BC), the UE may transmit the target SRS resource by using a spatial domain filter (spatial domain transmission filter) the same as the spatial domain filter (spatial domain transmission filter) for transmission of the reference SRS. In other words, in this case, the UE may assume that the UE transmit beam of the reference SRS and the UE transmit beam of the target SRS are the same.

Based on a value of a given field (for example, an SRS resource indicator (SRI) field) in DCI (for example, DCI format 0_1), the UE may determine spatial relation of the PUSCH scheduled by the DCI. Specifically, the UE may use, for PUSCH transmission, the spatial relation information (for example, the RRC information element "spatialRelationInfo") of the SRS resource determined based on a value (for example, the SRI) of the given field.

When codebook-based transmission is used for the PUSCH, for the UE, two SRS resources may be configured by RRC, and one of the two SRS resources may be indicated by DCI (a given field of 1 bit). When non-codebook-based transmission is used for the PUSCH, for the UE, four SRS resources may be configured by RRC, and one of the four SRS resources may be indicated by DCI (a given field of 2 bits). To use spatial relation other than the spatial relation of two or four configured by RRC, RRC reconfiguration is required.

Note that a DL-RS can be configured for the spatial relation of the SRS resources used for the PUSCH. For example, regarding the SP-SRS, for the UE, the spatial relation of a plurality of (for example, up to 16) SRS resources can be configured using the RRC, and one of the plurality of SRS resources can be indicated using the MAC CE.

### (UL TCI State)

In Rel-16 NR, using a UL TCI state as a beam indication method of the UL has been under study. Reporting of the UL TCI state is similar to reporting of a DL beam (DL TCI state) of the UE. Note that the DL TCI state may be interchangeably interpreted as a TCI state for a PDCCH/PDSCH.

A channel/signal (which may be referred to as a target channel/RS) for which the UL TCI state is configured (indicated) may be, for example, at least one of a PUSCH (a PUSCH DMRS), a PUCCH (a PUCCH DMRS), a random access channel (Physical Random Access Channel (PRACH)), an SRS, and the like.

For example, the RS (source RS) to have a QCL relationship with the channel/signal may be a DL RS (for example, an SSB, a CSI-RS, a TRS, or the like), or may be a UL RS (for example, an SRS, an SRS for beam management, or the like).

In the UL TCI state, the RS to have a QCL relationship with the channel/signal may be associated with a panel ID for receiving or transmitting the RS. The association may be explicitly configured (or indicated) by higher layer signaling (for example, RRC signaling, a MAC CE, or the like), or may be implicitly determined.

Correspondence between the RS and the panel ID may be configured being included in UL TCI state information, or may be configured being included in at least one of resource configuration information, spatial relation information, and the like of the RS.

QCL types indicated by the UL TCI state may be existing QCL types A to D, may be other QCL types, or may include given spatial relation, a related antenna port (port index), or the like.

When the UE is indicated with a related panel ID (for example, indicated by DCI) regarding UL transmission, the UE may perform the UL transmission, using a panel corresponding to the panel ID. The panel ID may be associated with the UL TCI state, and when the UE is indicated (or activated) with the UL TCI state regarding a given UL channel/signal, the UE may identify a panel to be used for transmission of the UL channel/signal in accordance with the panel ID related to the UL TCI state.

### (Transmission of Plurality of Panels)

### <Transmission Method>

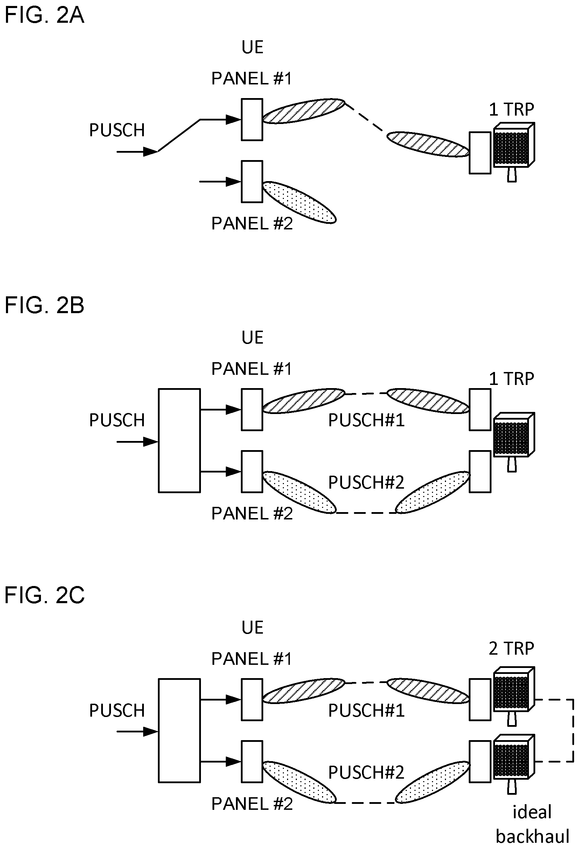

In a Rel-15 UE and a Rel-16 UE, only one beam and one panel are used for UL transmission at one time point (FIG. 2A). In Rel. 17 and later versions, for the sake of improvement of throughput and reliability of the UL, simultaneous UL transmission of a plurality of beams and a plurality of panels to one or more TRPs has been under study. Although the following will describe simultaneous transmission of PUSCHs, similar processing may be performed regarding PUCCHs as well.

Regarding the simultaneous UL transmission using a plurality of beams and a plurality of panels, reception by one TRP including a plurality of panels (FIG. 2B) or reception by two TRPs including an ideal backhaul (FIG. 2C) has been under study. A single PDCCH for scheduling of a plurality of PUSCHs (for example, simultaneous transmission of PUSCH #1 and PUSCH #2) has been under study. Support of panel-specific transmission and introduction of the panel ID have been under study.

The base station may configure or indicate panel-specific transmission for UL transmission, using the UL TCI or the panel ID. The UL TCI (UL TCI state) may be based on signaling similar to DL beam indication supported in Rel. 15. The panel ID may be implicitly or explicitly applied to transmission of at least one of a target RS resource or a target RS resource set, a PUCCH, an SRS, and a PRACH. When the panel ID is explicitly reported, the panel ID may be configured in at least one (for example, DL RS resource configuration or spatial relation information) of a target RS, a target channel, and a reference RS.

A multi panel UL transmission method or a multi panel UL transmission method candidate may be at least one of the following methods 1 to 3 (multi panel UL transmission methods 1 to 3). Only one of methods 1 to 3 may be supported. A plurality of methods including at least one of methods 1 to 3 may be supported, and one of the plurality of methods may be configured for the UE.

### <<Method 1»

### Coherent Multi Panel UL Transmission

A plurality of panels may be synchronized with each other. All of the layers are mapped to all of the panels. A plurality of analog beams are indicated. The SRS resource indicator (SRI) field may be enhanced. In the method, a maximum of four layers may be used for the UL.

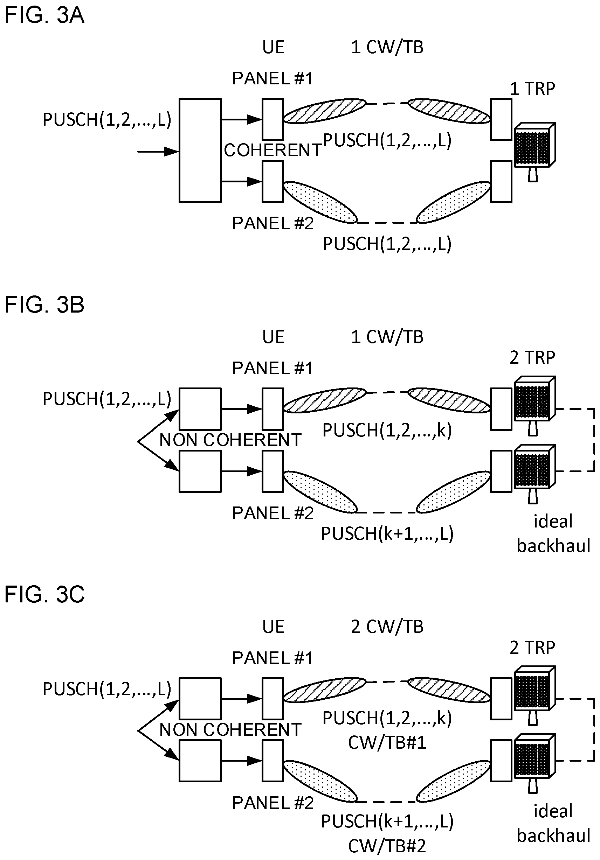

In the example of FIG. 3A, the UE maps one code word (CW) or one transport block (TB) to L layers (PUSCHs (1, 2, ..., L)), and transmits the L layers from each of two panels. Panel #1 and panel #2 are coherent. With method 1, a gain owing to diversity can be achieved. A total number of layers in two panels is 2L. When a maximum value of the total number of layers is 4, the maximum value of the number of layers in one panel is 2.

### <<Method 2»

### Non Coherent Multi Panel UL Transmission of One Code Word (CW) or Transport Block (TB)

A plurality of panels need not be synchronized with each other. Different layers are mapped to different panels and one CW or TB for PUSCHs from a plurality of panels. Layers corresponding to one CW or TB may be mapped to a plurality of panels. In the method, a maximum of four layers or a maximum of eight layers may be used for the UL. When a maximum of eight layers are supported, the method may support one CW or TB using the maximum of eight layers.

In the example of FIG. 3B, the UE maps one CW or one TB to k layers (PUSCHs (1, 2, ..., k)) and L - k layers (PUSCHs (k + 1, k + 2, ..., L)), transmits the k layers from panel #1, and transmits the L - k layers from panel #2. With method 2, a gain owing to multiplexing and diversity can be achieved. A total number of layers in two panels is L.

### <<Method 3»

### Non Coherent Multi Panel UL Transmission of Two CWs or TBs

A plurality of panels need not be synchronized with each other. Different layers are mapped to different panels and two CWs or TBs for PUSCHs from a plurality of panels. Layers corresponding to one CW or TB may be mapped to one panel. Layers corresponding to a plurality of CWs or TBs may be mapped to different panels. In the method, a maximum of four layers or a maximum of eight layers may be used for the UL. When a maximum of eight layers are supported, the method may support a maximum of four layers per CW or TB.

In the example of FIG. 3C, among two CWs or two TBs, the UE maps CW #1 or TB #1 to k layers (PUSCHs (1, 2, ..., k)), maps CW #2 or TB #2 to L - k layers (PUSCHs (k + 1, k + 2, ..., L)), transmits the k layers from panel #1, and transmits the L - k layers from panel #2. With method 3, a gain owing to multiplexing and diversity can be achieved. A total number of layers in two panels is L.

### <DCI Enhancement>

When methods 1 to 3 described above are applied, existing DCI may be enhanced. For example, at least one of the following options 1 to 6 may be applied.

### [Option 1]

A plurality of PUSCHs may be indicated (scheduled) by a single PDCCH (DCI) for method 1. In order to indicate a plurality of PUSCHs, the SRI field may be enhanced. In order to indicate a plurality of PUSCHs from a plurality of panels, a plurality of SRI fields in the DCI may be used. For example, the DCI for scheduling two PUSCHs may include two SRI fields.

An enhancement of the SRI field for method 2 may be different from an enhancement of the SRI field for method 1 in the following.

For layers 1, 2, ..., k out of L layers, the UE may use an SRI (SRS #i) that is indicated first by the SRI field in the DCI for a spatial filter for UL transmission from panel 1. For the remaining layers k + 1, k + 2, ..., L out of the L layers, the UE may use an SRI (SRS #j) that is indicated second by the SRI field in the DCI for a spatial filter for UL transmission from panel 2. k may be in accordance with a rule defined in advance, or may be explicitly indicated by the DCI.

Regarding enhancement of the SRI field for method 3, in order to support two CWs or TBs for different TRPs, in addition to the enhancement of the SRI field for method 2, to indicate a plurality of PUSCHs, at least one of a modulation and coding scheme (MCS) field, a precoding information and number of layers field, a transmission power control (TPC) command for a scheduled PUSCH (TPC command for scheduled PUSCH) field, a frequency domain resource assignment (FDRA) field, and a time domain resource assignment (TDRA) field in the DCI may be enhanced. Different TRPs may have different path losses, or may have different SINRs.

### [Option 2]

Information related to the repetition transmission type of the PUSCH may be reported to or configured for the UE, using higher layer signaling. For example, when the UE is not configured with the repetition transmission type B (for example, PUSCH-RepTypeB) using higher layer signaling, repetition transmission type A may be applied. The repetition transmission type may be configured for each DCI format (or each type of the PUSCH). The types of the PUSCH may include a dynamic grant-based PUSCH and a configured grant-based PUSCH.

Information related to a repetition factor, information related to assignment of the PUSCH, information related to a spatial relation (or a precoder) used for PUSCH transmission, and information related to a redundancy version used for PUSCH transmission may be reported to the UE, using DCI or a combination of DCI and a higher layer parameter.

Regarding the information related to a repetition factor (for example, K) and the information related to assignment of the PUSCH (for example, the start symbol S and the PUSCH length L), a plurality of candidates may be defined in a table, and a specific candidate may be selected using DCI. Although the following description will take an example of a case in which the repetition factor (K) of the PUSCH is 4, an applicable repetition factor is not limited to 4.

Regarding the information related to a spatial relation (hereinafter also referred to as spatial relation information), a plurality of candidates are configured using higher layer signaling, and one or more pieces of spatial relation information may be activated using at least one of DCI and a MAC CE.

### [Option 3]

The number of bits of the TPC command field included in a DCI for scheduling PUSCH transmission across a plurality of TRPs, and associations between the TPC command field and indexes (for example, closed loop indexes) related to the TPC will be described. The UE may control a plurality of PUSCH transmissions, based at least on the indexes.

The number of bits of the TPC command field included in a DCI for scheduling PUSCH transmission across a plurality of TRPs may be enhanced to the number of bits being a specific number (for example, 2M), in comparison to the number of bits in Rel. 15/16. In the present disclosure, M may be the number of TRPs, or may be the number of SRIs that may be indicated for PUSCH transmission across a plurality of TRPs.

For example, regarding codebook-based transmission, when the SRI for PUSCH transmission for two TRPs is indicated by DCI, the TPC command field may be enhanced to 4 bits.

The association between the enhanced TPC command field and a specific index (for example, a closed loop index) related to the TPC may conform to at least one of the following association 1 and association 2. Although the following will describe the closed loop index, the closed loop index of the present disclosure may be interpreted as any specific index related to TPC.

### [[Association 1]]

When the enhanced TPC command field is separated by a specific number (for example, 2, 4, or the like) of bits, an x-th (x is any integer) smallest (or largest) specific number of bits may be associated with an x-th SRI indicated by DCI/combination of SRIs.

### [[Association 2]]

When the enhanced TPC command field is separated by a specific number (for example, 2) bits, an x-th smallest (or largest) specific number of bits may be associated with the SRI corresponding to an x-th smallest (or largest) closed loop index indicated by DCI.

### [Option 4]

When the repetition transmission of the PUSCHs across a plurality of TRPs is performed, the same number of antenna ports may be configured/indicated for different TRPs (different PUSCHs). In other words, the same number of antenna ports may be configured/indicated for a plurality of TRPs (a plurality of PUSCHs) in common. In this case, the UE may assume that the same number of antenna ports are configured/indicated for a plurality of TRPs (a plurality of PUSCHs) in common. In this case, the UE may determine the TPMI for PUSCH transmission in accordance with at least one of indication method 1-1 and indication method 1-2 described below.

### [[Indication Method 1-1]]

The precoding information and number of layers field included in scheduling DCI may have the same number of bits as the number of bits defined in Rel. 15/16. In this case, one precoding information and number of layers field included in a DCI may be indicated for the UE. In other words, the UE may determine the TPMI, based on one precoding information and number of layers field included in a DCI. Next, the UE may apply the precoding information and number of layers field/TPMI for PUSCH transmission of a different TRP.

### [[Indication Method 1-2]]

The precoding information and number of layers field included in scheduling DCI may have a number of bits enhanced to a specific number, in comparison to Rel. 15/16. The specific number may be expressed by X × M.

X may be determined based on a size of the precoding information and number of layers field included in the DCI for performing UL transmission to one TRP. For example, X may be determined based on at least one of the number of antenna ports and a number configured by a specific higher layer parameter (for example, at least one of ul-FullPowerTransmission, maxRank, codebookSubset, and transformPrecoder).

X may be a fixed value. The UE may assume that X has a fixed size, regardless of the number of antenna ports configured in a higher layer. The UE may assume that X has a fixed size, regardless of a value of a number of antenna ports field (the number of antenna ports indicated by the number of antenna ports field).

When the repetition transmission of the PUSCHs across a plurality of TRPs is performed, a different/the same number of antenna ports may be configured/indicated for a different TRP (a different PUSCH). In other words, the number of antenna ports may be configured/indicated separately for a plurality of TRPs (a plurality of PUSCHs). In this case, the UE may assume that the number of antenna ports is configured/indicated independently for each of the plurality of TRPs (the plurality of PUSCHs). In this case, the UE may determine the TPMI for PUSCH transmission in accordance with indication method 2 described below.

### [[Indication Method 2]]

The precoding information and number of layers field included in scheduling DCI may have a number of bits enhanced to a specific number, in comparison to Rel. 15/16. The specific number may be expressed by X₁ + X₂ + ... + X_{M}.

Xᵢ (i is any integer form 1 to M) may be determined based on a size of the precoding information and number of layers field included in the DCI for performing UL transmission for an i-th TRP. For example, Xᵢ may be determined based on at least one of the number of antenna ports and a number configured by a specific higher layer parameter (for example, at least one of ul-FullPowerTransmission, maxRank, codebookSubset, and transformPrecoder). Xᵢ may be configured to a fixed value.

M may be the number of TRPs, or may be the number of pieces of spatial relation information (SRI) that may be indicated for PUSCH transmission across a plurality of TRPs.

### [Option 5]

The UE may determine the SRI to be applied to the PUSCH, based on at least one of the SRI field in the DCI for scheduling the PUSCH and a CORESET pool index of a control resource set (CORESET) for the DCI (for example, for detecting the DCI).

The UE may determine the SRI to be applied to each PUSCH, based on a plurality of SRI fields included in the DCI for scheduling a plurality of PUSCHs.

The UE may determine the SRI to be applied to each PUSCH, based on one SRI field included in the DCI for scheduling a plurality of PUSCHs.

The UE may determine transmission power for the PUSCH, based on the SRI field in the DCI for scheduling the PUSCH. For example, the UE may determine a parameter related to transmission power control (TPC) for the PUSCH, based on the SRI field in the DCI for scheduling the PUSCH.

### [Option 6]

The UE may determine to perform one of repetition transmission for a single TRP and repetition transmission for a plurality of TRPs, based on a specific field included in the DCI.

For example, among a plurality of (for example, two) SRI fields (a first SRI field and a second SRI field), when application of one of the first SRI field and the second SRI field is indicated by a field included in the DCI, the UE may determine that the repetition transmission of a plurality of PUSCHs is performed in the applied SRI. In other words, among a plurality of SRI fields, when application of one SRI field is indicated by a field included in the DCI, the UE may determine to perform the repetition transmission of the PUSCHs in a single TRP.

For example, among a plurality of (for example, two) SRI fields (a first SRI field and a second SRI field), when application of both of the first SRI field and the second SRI field is indicated by a field included in the DCI, the UE may determine that the repetition transmission of a plurality of PUSCHs is performed in a plurality of SRIs (for example, a plurality of TRPs). In other words, when application of a plurality of SRI fields is indicated by a field included in the DCI, the UE may determine to perform the repetition transmission of the PUSCHs in a plurality of TRPs.

### (CBG-Based Transmission)

Incidentally, in Rel-15/16 NR, transmission in a unit of a transport block (TB) (TB-based transmission) and transmission in a unit of a code block group (CBG) (CBG-based transmission) are defined. Note that transmission of the present disclosure may be interchangeably interpreted as retransmission.

Note that the CBG may be a group of one or more code blocks (CBs). The CB may correspond to a part (segment) into which the TB is divided when, for example, a TB size exceeds a threshold (for example, 6144 bits). In other words, one TB may include one or a plurality of CBs.

Note that, in the present disclosure, the CBG may be interchangeably interpreted as the CB. The TB may be interchangeably interpreted as the code word (CW).

The UE may receive UE-specific PUSCH parameter configuration information (for example, an information element "PUSCH-ServingCellConfig" of RRC) in common to BWPs of a serving cell. When PUSCH-ServingCellConfig includes a parameter (PUSCH-CodeBlockGroupTransmission) for enabling and configuring CBG-based transmission, the UE performs CBG-based PUSCH transmission in the serving cell.

PUSCH-CodeBlockGroupTransmission may include a parameter (maxCodeBlockGroupsPerTransportBlock) indicating a maximum number of CBGs per TB. As the maximum number of CBGs per TB for the PUSCH, 2, 4, 6, 8, or the like may be configured.

In Rel-15/16 NR, one CW may be transmitted using one PUSCH.

When the CBG-based transmission is configured, DCI format 0_1 includes a field of information (CBG transmission information (CBGTI)) indicating the CBG to be transmitted/retransmitted. The number of bits of the CBGTI field may be determined by the number of bits for the maximum number of CBGs per TB configured for the PUSCH.

When initial transmission of the TB is indicated by a new data indicator (NDI) field in the scheduling DCI, the UE may expect that the CBGTI field in the DCI indicates all of the CBGs of the TB, or the UE may include all of the CBGs of the TB.

When retransmission of the TB is indicated by the NDI field in the scheduling DCI, the UE may include only the CBG indicated by the CBGTI field in the DCI.

Note that, when the bit value of the CBGTI field is '0', this means that a corresponding CBG is not to be transmitted, whereas when the bit value of the CBGTI field is '1', this means that a corresponding CBG is to be transmitted. Order of bits of the CBGTI field may be such order that mapping is performed from the most significant bit (MSB), in order from CBG #0.

The UE may receive UE-specific PDSCH parameter configuration information (for example, an information element "PDSCH-ServingCellConfig" of RRC) in common to BWPs of a serving cell. When PDSCH-ServingCellConfig includes a parameter (PDSCH-CodeBlockGroupTransmission) for enabling or configuring CBG-based transmission, the UE performs CBG-based PDSCH reception in the serving cell.

PDSCH-CodeBlockGroupTransmission may include a parameter (maxCodeBlockGroupsPerTransportBlock) indicating a maximum number of CBGs per TB. As the maximum number of CBGs per TB for the PDSCH, 2, 4, 6, 8, or the like may be configured. Note that, when a plurality of CWs are used (maxNrofCodeWordsScheduledByDCI) regarding the PDSCH, the maximum number of CBGs may be 4. The use of a plurality of CWs regarding the PDSCH may be determined by a parameter (*maxNrofCodeWordsScheduledByDCI*) indicating a maximum number of CWs to be scheduled by a DCI, which is included in PDSCH configuration information (an information element "PDSCH-Config" of RRC).

In Rel-15/16 NR, one or two CWs may be transmitted using one PDSCH.

When the CBG-based transmission is configured, DCI format 1_1 includes a field of information (CBGTI) indicating the CBG to be transmitted/retransmitted. The number of bits of the CBGTI field may be determined by the maximum number of CBGs per TB configured for the PDSCH and maxNrofCodeWordsScheduledByDCI.

Specifically, a size of the CBGTI field of DCI format 1_1 may be N_{TB} · N bits. Here, N_{TB} is a value indicated by maxNrofCodeWordsScheduledByDCI, and N is the maximum number of CBGs per TB configured by maxCodeBlockGroupsPerTransportBlock. When N_{TB} = 2, the CBGTI field is mapped so that a first set of N bits starting from the MSB corresponds to a first TB, and a second set corresponds to a second TB (if being scheduled). First M bits of each set of N bits are mapped in order to M CBGs of a corresponding TB on a one-to-one basis, and the MSB is mapped to CBG #0.

Note that the number M of CBGs for TB reception may be determined by M = min(N, C), and C may be the number of CBs of the TB. min(N, C) is a function that returns the smaller value between N and C. M may be different between the first TB and the second TB.

When initial transmission of the TB is indicated by a new data indicator (NDI) field in the scheduling DCI, the UE may assume that all of the CBGs of the TB are present.

When retransmission of the TB is indicated by the NDI field in the scheduling DCI, the UE may include only the CBG indicated by the CBGTI field in the DCI.

Note that, when the bit value of the CBGTI field is '0', this means that a corresponding CBG is not to be transmitted, whereas when the bit value of the CBGTI field is '1', this means that a corresponding CBG is to be transmitted.

Note that DCI format 1_1 may further include CBG flushing out information (CBGFI). The CBGFI may indicate whether or not a retransmitted CBG is combinable with the same CBG previously received. The UE may be configured as to whether or not the CBGFI is enabled using an RRC parameter (codeBlockGroupFlushIndicator) of a parameter for enabling and configuring CBG-based transmission.

As described above, in dynamic grant-based DL transmission or UL transmission, retransmission may be controlled for each TB, or retransmission may be controlled for each CBG. When retransmission is controlled for each CBG, retransmission of a successfully decoded CBG can be omitted, and thus overhead can be reduced as compared to TB-based retransmission.

### (Problems)

As described above, DCI enhancement related to the examples of methods 1 to 3 and the like have been under study. However, details of operations for transmitting a plurality of CWs on a PUSCH have not been fully studied yet. For example, when a plurality of CWs are transmitted on a PUSCH, how to support CBG-based transmission has not been fully studied yet. Unless PUSCH transmission for a plurality of CWs is appropriately performed, throughput may be reduced or communication quality may be deteriorated. In view of this, the inventors of the present invention came up with the idea of a method for the UE to appropriately perform PUSCH transmission for a plurality of CWs.

Embodiments according to the present disclosure will be described in detail with reference to the drawings as follows. The radio communication methods according to respective embodiments may each be employed individually, or may be employed in combination.

Note that, in the present disclosure, "A/B" may be interpreted as "at least one of A and B".

In the present disclosure, activate, deactivate, indicate, select, configure, update, determine, report, and the like may be interchangeably interpreted as each other.

In the present disclosure, a CW, a TB, a beam, a panel, a PUSCH, a PDSCH, a UE panel, an RS port group, a DMRS port group, an SRS port group, an RS resource group, a DMRS resource group, an SRS resource group, a beam group, a TCI state group, a spatial relation group, an SRS resource indicator (SRI) group, an antenna port group, an antenna group, a CORESET group, and a CORESET pool may be interchangeably interpreted as each other.

The panel may be associated with at least one of a panel ID, a UL TCI state, a UL beam, a DL beam, a DL RS resource, and spatial relation information.

In the present disclosure, a spatial relation, a spatial configuration, spatial relation information, spatialRelationInfo, an SRI, an SRS resource, a precoder, a UL TCI, a TCI state, a Unified TCI, QCL, and the like may be interchangeably interpreted as each other.

In the present disclosure, an index, an ID, an indicator, and a resource ID may be interchangeably interpreted as each other.

In the present disclosure, single DCI (sDCI), a single PDCCH, a multi TRP (MTRP) system based on the single DCI, sDCI-based MTRP, scheduling of a plurality of PUSCHs (corresponding to different SRIs) using a DCI, sDCI-based MTRP transmission, and activation of two TCI states on at least one TCI code point may be interchangeably interpreted as each other.

In the present disclosure, multi DCI (mDCI), a multi PDCCH, a multi TRP system based on the multi DCI, mDCI-based MTRP, mDCI-based MTRP transmission, use of the multi DCI for MTRP, scheduling of a plurality of PUSCHs (corresponding to different SRIs) using two pieces of DCI, and configuration of two CORESET pool indexes or CORESET pool index = 1 (or one or more values) may be interchangeably interpreted as each other.

In the present disclosure, a repetition (one repetition), an occasion, and a channel may be interchangeably interpreted as each other. In the present disclosure, UL data, a TB, a CW, and UCI may be interchangeably interpreted as each other.

A transmission method of the present disclosure and a new transmission method may mean at least one of methods 1 to 3 described above. At least one of methods 1 to 3 described above may be applied to PUSCH transmission in the embodiments described below. Note that application of at least one of methods 1 to 3 described above related to the PUSCH may be configured by a higher layer parameter, for example.

In the present disclosure, two CWs transmitted using PUSCHs may be CWs with different details, or may be CWs with the same details. The PUSCHs for transmitting two CWs may be regarded as one PUSCH that is simultaneously or repeatedly transmitted.

The DCI in the embodiments described below may be limited to a specific DCI format, or may correspond to a plurality of DCI formats, among DCI formats (for example, DCI formats 0_0, 0_1, and 0_2) for scheduling the PUSCH. Note that, when the DCI corresponds to a plurality of DCI formats, control (the same control, the same processing) common to the DCI formats may be performed, or different control may be performed for each DCI format.

In the embodiments described below, "plurality" and "two" may be interchangeably interpreted as each other.

The number of layers of PUSCH transmission in the embodiments described below need not necessarily be larger than 4. For example, PUSCH transmission of two CWs in the present disclosure may be performed with the number of layers being 4 or less (for example, 2). Regarding methods 1 to 3 described above, the number L of layers may be larger than 4, or may be 4 or less. The maximum number of layers is not limited to 4 or more either, and a number less than 4 may be applied.

PUSCH transmission in the embodiments described below may or may not presuppose the use of a plurality of panels (may be applied regardless of panels).

### (Radio Communication Method)

### <First Embodiment>

A first embodiment relates to the number of CWs, the number of CBGs, the CBGTI field, and the like for the PUSCH.

### [Number of CWs]

Regarding the PUSCH, whether or not one or a plurality of (for example, two) CWs are scheduled by a DCI (single DCI) may be configured for the UE by higher layer signaling (for example, an RRC parameter, a MAC CE). Configuration of the higher layer signaling may be configuration for each BWP/serving cell. The configuration may correspond to information explicitly indicating the number of CWs, or may correspond to information indicating enabling/disabling of scheduling of a given number of CWs (for example, 2).

The UE may determine the number of CWs to be scheduled by the DCI (which may be referred to as the number of CWs to be configured), based on the configuration.

The number of CWs to be configured may be a fixed number of CWs to be scheduled. For example, when there is configuration from RRC that the number of CWs to be scheduled by the DCI is two, the UE may expect that two CWs are to be invariably scheduled by the DCI regarding the PUSCH. In this case, even when the scheduled PUSCH corresponds to one MIMO layer (single layer), the fixed number of CWs to be configured may be used for transmission of the PUSCH.

The number of CWs to be configured may be the maximum number of CWs to be scheduled. For example, when there is configuration from RRC that the number of CWs to be scheduled by the DCI is two, the UE may expect that one or two CWs are to be dynamically scheduled by the DCI (in other words, the number of CWs to be scheduled possibly varies within a range of values up to the maximum number) regarding the PUSCH. In this case, when the scheduled PUSCH corresponds to X or more MIMO layers, the UE may use two CWs, or otherwise the UE may use one CW.

Note that the value of X may be determined in a specification in advance, may be reported from the base station to the UE using higher layer signaling (for example, an RRC parameter, a MAC CE), physical layer signaling (for example, DCI), or a combination of these, or may be determined based on a UE capability.

### [Maximum Number of CBGs per TB]

Regardless of whether one or two CWs are (or may be) scheduled by a DCI, possible values of the parameter (maxCodeBlockGroupsPerTransportBlock) indicating the maximum number of CBGs per TB may be 2, 4, 6, and 8 (the same as those of Rel. 16).

When one CW is scheduled by a DCI, the possible values of the parameter (maxCodeBlockGroupsPerTransportBlock) indicating the maximum number of CBGs per TB are 2, 4, 6, and 8, which are the same as those of Rel. 16, and when one CW is scheduled by two pieces of DCI, the possible values of the parameter (maxCodeBlockGroupsPerTransportBlock) indicating the maximum number of CBGs per TB may be smaller than those of the case in which one CW is scheduled (may be limited to 2 and 4, for example).

In addition to the parameter (maxCodeBlockGroupsPerTransportBlock) indicating the maximum number of CBGs per TB, a parameter (for example, maxCodeBlockGroupsPerTransportBlockForTwoCodeWords) indicating the maximum number of CBGs per TB for two TBs may be configured. The parameter indicating the maximum number of CBGs per TB for two TBs may indicate the maximum number of CBGs per TB in common to the two TBs, or may indicate the maximum number of CBGs per TB being specific to each of the two TBs. For example, the maximum number of CBGs regarding the first TB may be a first maximum number of CBGs, and the maximum number of CBGs regarding the second TB may be a second maximum number of CBGs different from the first maximum number of CBGs. Note that, when the maximum number of CBGs is specific to each TB, the first maximum number of CBGs regarding one of the TBs may be configured by a higher layer parameter, and the second maximum number of CBGs regarding the other TB may be determined based on the first maximum number of CBGs. Note that there may be a definition/configuration that the first maximum number of CBGs is invariably larger than/smaller than/the same as the second maximum number of CBGs, for example.

### [CBGTI Field]

In Rel. 16, the CBGTI field is included only in DCI format 0_1, as the DCI format for the PUSCH. In the present disclosure, the CBGTI field may be included in DCI format 0_1/0_2, as the DCI format for the PUSCH. Unless otherwise specified, the value indicated by the CBGTI field and the control (processing) related to the CGBTI field may be the same as those described above (the same as those in existing NR specifications).

When the CBG-based transmission is configured, DCI format 0_1/0_2 may include a field of information (CBGTI) indicating the CBG to be transmitted/retransmitted. The number of bits of the CBGTI field may be determined by the above-described maximum number of CBGs per TB configured regarding the PUSCH and the number of CWs to be scheduled by a DCI.

Specifically, a size of the CBGTI field of DCI format 0_1/0_2 may be N_{TB} · N bits. Here, N_{TB} is the number of CWs to be scheduled by a DCI, and N is the maximum number of CBGs per TB configured by maxCodeBlockGroupsPerTransportBlock. When N_{TB} = 2, the CBGTI field is mapped so that a first set of N bits starting from the MSB corresponds to a first TB, and a second set corresponds to a second TB (if being scheduled). First M bits of each set of N bits are mapped in order to M CBGs of a corresponding TB on a one-to-one basis, and the MSB is mapped to CBG #0.

Note that the number M of CBGs for TB transmission may be determined by M = min(N, C), and C may be the number of CBs of the (TB) in the PUSCH. min(N, C) is a function that returns the smaller value between N and C. M may be different between the first TB and the second TB.

The size of the CBGTI field may be computed according to "number of CWs × number of CBGs (per TB)".

For example, as described above, regardless of whether one or two CWs are (or may be) scheduled by a DCI, when the possible values of the parameter (maxCodeBlockGroupsPerTransportBlock) indicating the maximum number of CBGs per TB are 2, 4, 6, and 8, the size of the CBGTI field may correspond to one of 2, 4, 6, 8, 12, and 16.

As described above, when one CW is scheduled by two pieces of DCI, and the possible values of the parameter (maxCodeBlockGroupsPerTransportBlock) indicating the maximum number of CBGs per TB are 2 and 4, the size of the CBGTI field may correspond to one of 2, 4, 6, and 8.

As described above, when the maximum number of CBGs per TB specific to each of the two TBs is configured, the size of the CBGTI field may correspond to N1 + N2. Here, N1 may be the maximum number of CBGs regarding the first TB, and N2 may be the maximum number of CBGs regarding the second TB.

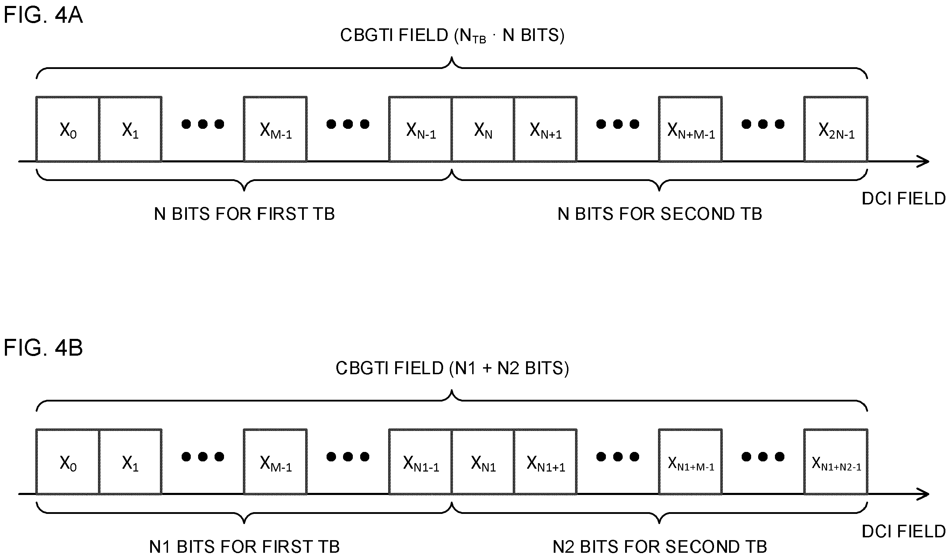

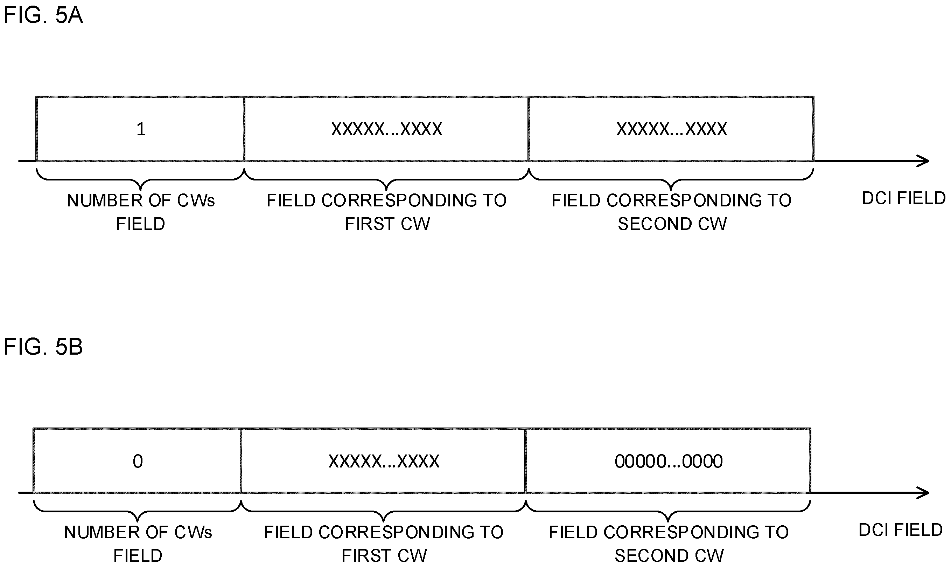

FIGS. 4A and 4B are diagrams to show examples of a bit configuration of the CBGTI field according to the first embodiment. Although the present examples show a case in which 2 < M < N and M for each TB is the same, the bit configurations of the CBGTI field are not limited thereto. Note that the present examples show only the bit configurations of a focused field among DCI fields, and as a matter of course, it can be understood that the DCI may include other fields (the same applies to FIGS. 5A and 5B to be described later).

FIG. 4A shows the bit configuration of a case in which the size of the CBGTI field is N_{TB} · N bits, and FIG. 4B shows the bit configuration of a case in which the size of the CBGTI field is N1 + N2 bits.

Note that the "number of CWs to be scheduled by a DCI" in the first embodiment may be interpreted as the number of CWs that may be scheduled by a DCI, or may be interpreted as the maximum number of CWs to be configured by a higher layer parameter or to be scheduled by DCI. The maximum number of CWs may be, for example, determined by the parameter (*maxNrofCodeWordsScheduledByDCI*) indicating the maximum number of CWs to be scheduled by a DCI, which is included in the PUSCH configuration information (an information element "PUSCH-Config" of RRC).

### [Variations]

In the first embodiment, the expression "PDSCH" may be replaced with another expression. In this case, in the above description, the PUSCH may be replaced with the PDSCH, "to transmit" may be replaced with "to receive", and DCI format 0_x (x is an integer) may be replaced with DCI format 1_x.

For example, regarding the PDSCH, even when two CWs are enabled, the possible values of the parameter (maxCodeBlockGroupsPerTransportBlock) indicating the maximum number of CBGs per TB may be 2, 4, 6, and 8. In this case, the size of the CBGTI field of DCI format 1_1/1_2 may correspond to one of 2, 4, 6, 8, 12, and 16.

According to the first embodiment described above, the UE can appropriately support the CBG-based transmission, even if it is PUSCH transmission regarding two CWs.

### <Second Embodiment>

A second embodiment relates to a field in a DCI when scheduling of two CWs by the a DCI is reported to the UE by higher layer signaling.

In the second embodiment, the DCI may include a plurality of NDI fields corresponding to NDIs of different CWs. For example, a first NDI field may indicate an NDI for a first CW, and a second NDI field may indicate an NDI for a second CW.

In the second embodiment, the DCI may include one field (which may be referred to as an NDI field, or another term may be used) corresponding to the plurality of NDIs. For example, the field may indicate the NDI for the first CW and the NDI for the second CW. Correspondence between the value of the field and the NDI for each CW may be determined in a specification in advance, may be reported from the base station to the UE using higher layer signaling (for example, an RRC parameter, a MAC CE), physical layer signaling (for example, DCI), or a combination of these, or may be determined based on a UE capability.

In the second embodiment, the DCI may include a plurality of RV fields corresponding to RVs of different CWs. For example, a first RV field may indicate an RV for the first CW, and a second RV field may indicate an RV for the second CW.

In the second embodiment, the DCI may include one field (which may be referred to as an RV field, or another term may be used) corresponding to the plurality of RVs. For example, the field may indicate the RV for the first CW and the RV for the second CW. Correspondence between the value of the field and the RV for each CW may be determined in a specification in advance, may be reported from the base station to the UE using higher layer signaling (for example, an RRC parameter, a MAC CE), physical layer signaling (for example, DCI), or a combination of these, or may be determined based on a UE capability.

The field related to the NDI/RV in the second embodiment may have the same number of bits as, or a different number of bits from, those of an existing NDI/RV field.

Note that, in the second embodiment, as in <DCI Enhancement> described above, the SRI/TPMI/TPC/MCS/RV/NDI/TDRA/FDRA/precoding information and number of layers fields and the like may be enhanced (for example, a plurality of those fields may be included for the first CW and for the second CW).

### [Dynamic Indication of Number of CWs]

As described in the first embodiment, when the number of CWs to be configured is the maximum number of CWs to be scheduled, one or two CWs may be dynamically scheduled for the UE by the DCI regarding the PUSCH.

Regarding the dynamic indication of the number of CWs, information related to the number of CWs to be scheduled (for example, "only one CW is scheduled (or one CW is disabled)", "two CWs are scheduled") may be explicitly or implicitly indicated for the UE by a field in the DCI. For example, the number of CWs to be scheduled may be explicitly reported by a new field (which may be referred to as, for example, a number of CWs field) in the DCI.

The number of CWs to be scheduled may be reported by another field (for example, an SRI/TPMI/TPC/MCS/RV/NDI/TDRA/FDRA/precoding information and number of layers field) in the DCI. For example, the number of CWs to be scheduled may be reported by a specific code point in one field, or the number of CWs to be scheduled may be reported by one or a plurality of fields each being configured to a specific value.

For example, when the number of MIMO layers to be scheduled is 1, the UE may determine that only one CW is to be scheduled.

Which field in the DCI is used for indication of the number of CWs (for example, whether the number of CWs field is included in the DCI) may be determined in a specification in advance, may be reported from the base station to the UE using higher layer signaling (for example, an RRC parameter, a MAC CE), or may be determined based on a UE capability.

Note that, when the number of CWs to be scheduled is indicated as 1, a field corresponding to the second CW (for example, an SRI/TPMI/TPC/MCS/RV/NDI/TDRA/FDRA field corresponding to the second CW regarding the enhanced DCI of <DCI Enhancement> described above) may be set to a specific value (for example, 0) or a specific bit string (for example, all '0'), may be ignored by the UE, may be used for another purpose (for example, for enhancement of performance of decoding (error correction) of the DCI as virtual cyclic redundancy check (virtual CRC) bits), or may not be included in the DCI.

In other words, the UE may perform control related to the field in the scheduling DCI, based on the number of CWs to be scheduled. For example, based on the number of CWs to be scheduled, the UE may assume a specific value (for example, 0) for the field corresponding to the second CW in the scheduling DCI, perform specific processing (for example, discarding) for the field, or determine that the field is not present.

FIGS. 5A and 5B are diagrams to show examples of a bit value of the DCI field according to the second embodiment. The present examples show bit values of the number of CWs field, a field corresponding to the first CW (for example, an SRI field for the first CW or the like), and a field corresponding to the second CW (for example, an SRI field for the second CW or the like). X indicates that any bit value (0/1) may be used.

FIG. 5A shows an example of the bit value of a case in which the number of CWs field indicates 1 (for example, number of CWs = 2 is meant). In this case, the field corresponding to each CW indicates a valid value (a value used for transmission of a corresponding CW).

FIG. 5B shows an example of the bit value of a case in which the number of CWs field indicates 0 (for example, number of CWs = 1 is meant). In this case, the field corresponding to the first CW indicates a valid value, whereas the field corresponding to the second CW is set to all 0.

According to the second embodiment described above, the UE can appropriately determine the configuration of the DCI field for scheduling PUSCH transmission regarding two CWs.

### <Third Embodiment>

A third embodiment relates to a TPC command in which scheduling of two CWs by a DCI is reported to the UE using higher layer signaling.

A TPC command field for the PUSCH may be enhanced in order to indicate a TPC command for a plurality of PUSCHs.

### [[Option 1]]

A plurality of TPC command fields in the DCI may be used for power control specific to a panel or a beam. In other words, each TPC command field may be applied to power control of PUSCH transmission for different CWs.

### [[Option 2]]

One TPC command field may be maintained. At least one of RRC signaling and a MAC CE may be used for mapping one TPC index to a plurality of sets of TPC parameters for a plurality of PUSCHs. A new table for mapping the TPC command may be defined in a specification. In the table, indexes may correspond to the plurality of sets of TPC parameters (or TPC commands) for a plurality of PUSCHs.

When the TPC command for each CW is available, an accumulated value of the TPC command may be accumulated separately for each CW, or may be accumulated collectively for the CWs (without distinguishing the CWs). For example, the UE may determine PUSCH transmission power for the first CW, based on the accumulated value of the TPC command for the first CW, and determine PUSCH transmission power for the second CW, based on the accumulated value of the TPC command for the second CW.

When the TPC command for each CW is not available, the accumulated value of the TPC command may be accumulated collectively for the CWs.

According to the third embodiment described above, the UE can appropriately control PUSCH transmission power for each CW, even if it is PUSCH transmission regarding two CWs.

### <Supplements>

Note that at least one of the embodiments described above may be applied only to the UE that has reported a specific UE capability or that supports the specific UE capability.

The specific UE capability may indicate at least one of the following:
- whether or not a plurality of (for example, two) CWs for the PUSCH scheduled by a DCI (single DCI) are supported,
- whether or not method 1/2/3 for UL (PUSCH) transmission is supported.

The specific UE capability may be a capability applied to all of the frequencies (in common regardless of a frequency), may be a capability for each frequency (for example, a cell, a band, a BWP), may be a capability for each frequency range (for example, FR1, FR2, FR3, FR4, FR5), or may be a capability for each subcarrier spacing.

The specific UE capability may be a capability applied to all of the duplex methods (in common regardless of a duplex method), or may be a capability for each duplex method (for example, time division duplex (TDD), frequency division duplex (FDD)).

At least one of the embodiments described above may be applied when the UE is configured with specific information related to the embodiments described above by higher layer signaling (when not being configured therewith, for example, operations of Rel. 15/16 are applied). For example, the specific information may be information indicating enabling of the number of CWs field, any RRC parameter for a specific release (for example, Rel. 18), or the like.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

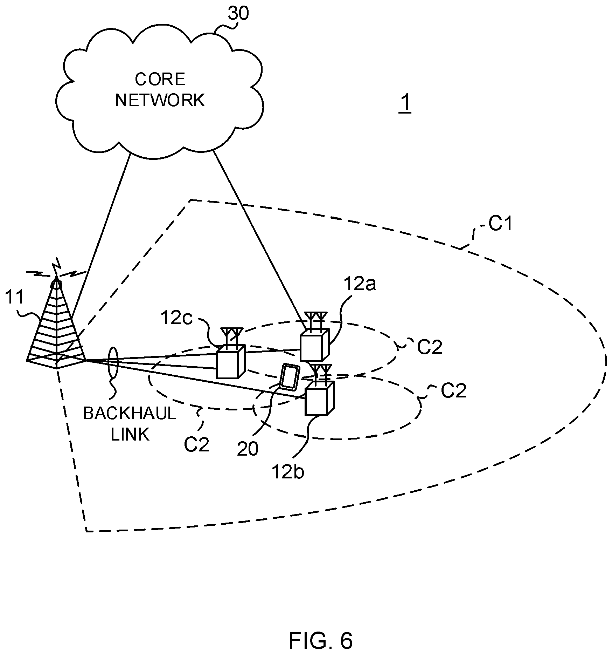

FIG. 6 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

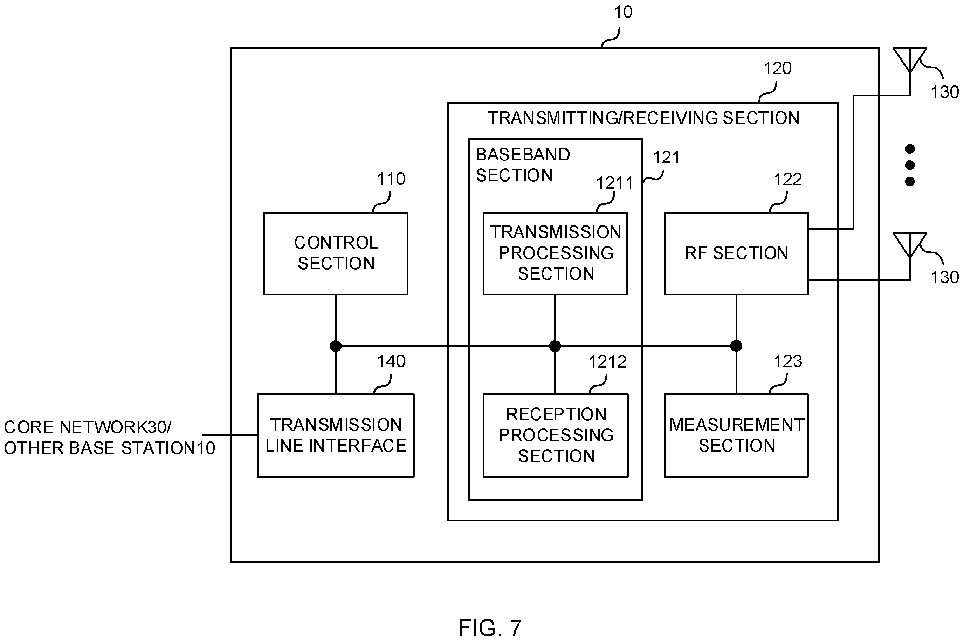

FIG. 7 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit, to the user terminal 20, information (for example, a higher layer parameter indicating a fixed number or a maximum number of code words (CWs) to be scheduled) indicating that a plurality of CWs are to be scheduled by a downlink control information (DCI) regarding a physical uplink shared channel (PUSCH).

The transmitting/receiving section 120 may receive the physical uplink shared channel for the plurality of code words transmitted by the user terminal 20, based on the information.

The transmitting/receiving section 120 may, in a case of transmitting, to the user terminal 20, information (for example, a higher layer parameter indicating a fixed number or a maximum number of code words (CWs) to be scheduled) indicating that a plurality of CWs are to be scheduled by a downlink control information (DCI) regarding a physical uplink shared channel (PUSCH), transmit the a downlink control information including information related to number of code words to be scheduled.

The control section 110 may assume that control related to a field corresponding to a specific code word (for example, a second CW) included in the a downlink control information is to be performed, based on the information related to the number of code words (for example, when the number of CWs = 1 is indicated). The transmitting/receiving section 120 may receive the physical uplink shared channel transmitted after the control is performed.

### (User Terminal)

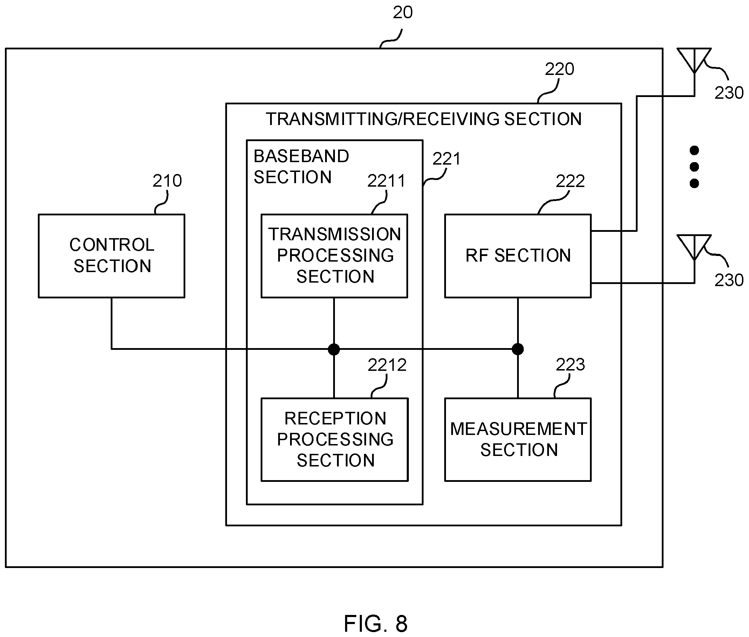

FIG. 8 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information (for example, a higher layer parameter indicating a fixed number or a maximum number of code words (CWs) to be scheduled) indicating that a plurality of CWs are to be scheduled by a downlink control information (DCI) regarding a physical uplink shared channel (PUSCH).

The control section 210 may control transmission of the physical uplink shared channel for the plurality of code words, based on the information.

The information may indicate a fixed number of code words to be scheduled. In this case, the control section 210 may determine that number of code words to be scheduled by the downlink control information is the fixed number.

The information may indicate a maximum number of code words to be scheduled. In this case, the control section 210 may determine that number of code words to be scheduled by the downlink control information possibly varies within a range of values up to the maximum number.

The control section 210 may compute a size of a code block group transmission information (CBGTI) field in the downlink control information, based on number of code words to be scheduled by the downlink control information and number of CBGs per code word.

The transmitting/receiving section 220 may, in a case of receiving information (for example, a higher layer parameter indicating a fixed number or a maximum number of code words (CWs) to be scheduled) indicating that a plurality of CWs are to be scheduled by a downlink control information (DCI) regarding a physical uplink shared channel (PUSCH), receive the downlink control information including information (for example, a number of CWs field) related to number of code words to be scheduled.

The control section 210 may perform control related to a field corresponding to a specific code word (for example, a second CW) included in the downlink control information, based on the information related to the number of code words (for example, when the number of CWs = 1 is indicated).

The control section 210 may determine that the field corresponding to the specific code word has a specific value (for example, 0) based on the information related to the number of code words.

The control section 210 may discard the field corresponding to the specific code word, based on the information related to the number of code words.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

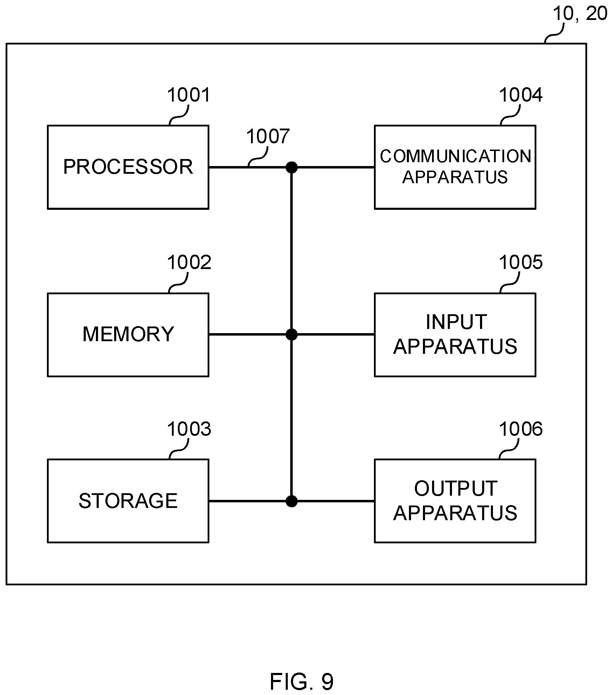

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives information indicating that a plurality of code words are to be scheduled by a downlink control information regarding a physical uplink shared channel; and
a control section that controls transmission of the physical uplink shared channel for the plurality of code words, based on the information.

2. The terminal according to claim 1, wherein
the information indicates a fixed number of code words to be scheduled, and
the control section determines that the number of code words to be scheduled by the downlink control information is the fixed number.

3. The terminal according to claim 1, wherein
the information indicates a maximum number of code words to be scheduled, and
the control section determines that the number of code words to be scheduled by the downlink control information possibly varies within a range of values up to the maximum number.

4. The terminal according to any one of claims 1 to 3, wherein
the control section computes a size of a code block group transmission information (CBGTI) field in the downlink control information, based on the number of code words to be scheduled by the downlink control information and number of CBGs per code word.

5. A radio communication method for a terminal, the radio communication method comprising:
receiving information indicating that a plurality of code words are to be scheduled by a downlink control information regarding a physical uplink shared channel; and
controlling transmission of the physical uplink shared channel for the plurality of code words, based on the information.

6. A base station comprising:
a transmitting section that transmits information indicating that a plurality of code words are to be scheduled by a downlink control information regarding a physical uplink shared channel; and
a receiving section that receives the physical uplink shared channel for the plurality of code words transmitted based on the information.
